# EUROPÄISCHE PATENTANMELDUNG

(11) **EP 1 736 922 A1**
(43) Veröffentlichungstag der Anmeldung: **27.12.2006**
(21) Anmeldenummer: 05012729.9
(22) Anmeldetag: 14.06.2005
(51) Int. Cl.: G06Q 30/00

(54) **Verfahren und Anordnung von Vorrichtungen zur Erzeugung von Sendungen mit Codes für den personalisierten Zugriff auf Internetseiten**

(71) Anmelder: Deutsche Post AG, 53113 Bonn (DE)
(72) Erfinder: Marthen, Norbert, 54550 Daun (DE); Kirch, Stefan, 52156 Monschau (DE)
(74) Vertreter: Jostarndt, Hans-Dieter

(57) **Zusammenfassung**

Die Erfindung betrifft ein Verfahren zur Erzeugung von Sendungen (40) mit einem Code (41) und eine Anordnung aus Vorrichtungen zur Durchführung des Verfahrens. Bei den Sendungen handelt es sich vorzugsweise um Massenmailings im Bereich des Direktmarketings und ein in eine Sendung eingebundener Code kann von dem Empfänger (70) auf einer Website (61) des Versenders eingegeben werden, so dass ein personalisierter Zugriff erfolgt. Das Verfahren sieht vor, dass sich ein Versender/Kunde (30) an einer Servicekomponente (50) anmeldet und die Servicekomponente oder eine Sendungskomponente (10) im Bereich des Kunden mehrere verschlüsselte Codes erzeugt. Die Codes werden in die Sendungskomponente (10) aufgenommen und in dieser verarbeitet, indem sie eine Adressdatei (12) erzeugt, in welcher einem Datensatz mit Empfängerinformationen jeweils ein Code zugeordnet ist. Die Adressdatei (12) wird beispielsweise in einer Datenbank (52) der Servicekomponente (50) hinterlegt und jeweils ein Code in eine Sendung für einen Empfänger (70) eingebunden. Gibt der Empfänger den Code auf der Website (61) des Versenders ein, wird eine Verbindung zwischen der website und der Servicekomponente (50) hergestellt und es erfolgt eine Extraktion der zugehörigen Empfängerinformationen aus der Adressdatei (12).

## Beschreibung

### Beschreibung:

Die Erfindung betrifft eine Anordnung von Vorrichtungen zur Erzeugung einer Sendung an einer Sendungskomponente, wobei die Sendungskomponente Mittel zur Erzeugung einer oder mehrerer Sendungen aus einer Vorlage umfasst. Die Vorlage wird dabei von einem Kunden an der Sendungskomponente bereitgestellt, wobei die Sendungskomponente ferner Mittel zum Zugriff auf eine Datenquelle mit Empfängerinformationen umfasst.

Die Erfindung umfasst ferner ein Verfahren zum Betrieb einer Anordnung von Vorrichtungen zur Erzeugung einer Sendung an einer Sendungskomponente.

Auf dem Gebiet des Direktmarketings ist es bekannt, in einer Mailingaktion mehreren Empfängern Informationen in Form von papierbasierten Sendungen, adressierten Drucksachen oder elektronischen Mails zukommen zu lassen. Dabei ist unter Direktmarketing üblicherweise eine Interaktion zwischen einem Anbieter und einem Kunden zu verstehen, bei der ein Kunde aus eigenem Antrieb auf eine Ansprache durch den Anbieter reagiert. Für derartige Massenmailings verwendet der Versender üblicherweise eigene oder gemietete Adressdatenbanken und lässt innerhalb einer Mailingaktion einem bestimmten Empfängerkreis jeweils eine Sendung zukommen, auf welche der Empfänger bei Interesse beispielsweise mit der Sendung einer Rückantwort reagieren kann.

Zur Vereinfachung der Sendungserzeugung ist es ferner bekannt, Computerprogramme einzusetzen, welche für einen Nutzer alle erforderlichen Tätigkeiten wie die Anschriftenüberprüfung, der Dublettenabgleich, die Portooptimierung und die Erstellung von zur Fertigung und Einlieferung benötigten Unterlagen durchführen. Ein derartiges verfahren und eine zugehörige Anordnung sind beispielsweise aus der deutschen Offenlegungsschrift DE 199 36 989 A1 bekannt. Das Verfahren geht vom Bilden einer Datei mit Mitteilungen und Versanddaten aus, die jeweils einer Empfängeradresse zugeordnet sind. Es umfasst ferner das empfängerspezifische Sortieren der Dateien aufgrund von Übereinstimmungen in den zugeordneten Empfängeradressen und das Ermitteln der gesamten Porti für alle Briefe der Datei unter Berücksichtigung von Mindeststückzahlen an Briefen und befördererspezifischen Rabattformen.

Beim Direktmarketing ist es ferner bekannt, einem Mailing einen Code bzw. eine PIN beizufügen, mit welchen der Empfänger sich auf einer Internetseite des versenders einloggen kann, um bestimmte Bereiche abrufen zu können. Dabei ist es vorteilhaft, dass der Empfänger anhand des Codes identifiziert und dadurch personalisiert begrüßt werden kann. Beispielsweise können seine Adressdaten bereits in einem Kontaktformular eingetragen sein, so dass diese von ihm nur noch bestätigt oder gegebenenfalls geändert werden müssen.

Üblicherweise verwendet jeder Versender von Massenmailings ein eigenes Verfahren zur Erzeugung des Codes, den er seinen Kunden übermittelt. Dabei werden die Anforderungen an die Sicherheit der Verschlüsselung und der Inhalt von jedem Versender individuell festgelegt. Zur Anwendung können beliebige Verschlüsselungstechniken kommen, üblicherweise werden jedoch einfache Verschlüsselungen verwendet.

Im Zusammenhang mit dem personalisierten Zugriff auf eine Internetseite ist es für ein Unternehmen üblicherweise vorteilhaft, die Reaktion (Response) der angeschriebenen Empfänger zu erfassen und auszuwerten. Beispielsweise können Adresskorrekturen in die eigene Adressdatenbank übernommen, erfolgreiche Logins gezählt und Storni und Dialoginformationen erfasst und ausgewertet werden.

Da die Erzeugung eines Codes und die anschließende Verarbeitung der Response für ein einzelnes Unternehmen, das Direktmarketing betreiben möchte, mit erheblichem Aufwand verbunden ist, besteht der Bedarf nach einem System, das es einem Kunden mit geringem Aufwand ermöglicht, Maseenmailings mit integriertem Code zu erzeugen und auszuwerten.

Aufgabe der Erfindung ist es daher, eine Anordnung aus Vorrichtungen bereitzustellen, die es einem Nutzer mit möglichst geringem Aufwand ermöglicht, ein individuelles Mailing mit einem Code zu erzeugen, der von dem Empfänger des Mailings für einen personalisierten Zugriff auf einer Internetseite eingegeben werden kann.

Aufgabe der Erfindung ist es ferner, ein Verfahren zum Betrieb einer derartigen Anordnung aus Vorrichtungen bereitzustellen.

Erfindungsgemäß wird diese Aufgabe durch eine Anordnung aus Vorrichtungen mit den Merkmalen des unabhängigen Anspruchs 1 gelöst. Vorteilhafte Weiterbildungen der Anordnung ergeben sich aus den Unteransprüchen 2-8. Die Aufgabe wird ferner durch ein Verfahren nach Anspruch 9 gelöst. Vorteilhafte Ausführungsformen des Verfahrens ergeben sich aus den Unteransprüchen 10-18.

Die Erfindung umfasst eine Anordnung von Vorrichtungen zur Erzeugung einer Sendung an einer Sendungskomponente, wobei die Sendungskomponente Mittel zur Erzeugung einer oder mehrerer Sendungen aus einer Vorlage umfasst, die von einem Kunden an der Sendungskomponente bereitgestellt wird, wobei die Sendungskomponente Mittel zum Zugriff auf eine Datenquelle mit Empfängerinformationen umfasst. Erfindungsgemäß umfasst die Anordnung ein Codeerzeugungsmittel zur Erzeugung wenigstens eines eindeutigen Codes und Mittel zur Aufnahme des Codes in die Sendungskomponente. In einem besonders bevorzugten Ausführungsbeispiel der Erfindung ist das Codeerzeugungsmittel der Sendungskomponente zuzuordnen, so dass die Sendungskomponente so ausgestaltet ist, dass sie Codes erzeugen kann.

In einem weiteren vorteilhaften Ausführungsbeispiel der Erfindung ist das Codeerzeugungamittel einer Servicekomponente zuzuordnen, welche physikalisch von der Sendungskomponente getrennt ist. Die Servicekomponente kann beispielsweise als Internetanwendung ausgebildet sein. Dies hat den Vorteil, dass die Sendungskomponente im Bereich des Kunden keine Ergänzung durch ein Codeerzeugungsmittel benötigt, sondern die Servicekomponente von mehreren Kunden zur Erzeugung von Codes genutzt werden kann. In diesem Fall umfasst die Servicekomponente zweckmäßigerweise Mittel zur Übermittlung wenigstens eines Codes an die Sendungskomponente.

Die Erfindung sieht ferner vor, dass die Sendungskomponente Mittel zur Erzeugung einer Adressdatei aufweist, wobei in der Adressdatei jeweils einem Datensatz mit Empfängerinformationen ein Code zugeordnet ist. Die Sendungskomponente weist Mittel zur Übermittlung der Adressdatei an die Servicekomponente auf und die Servicekomponente umfasst vorzugsweise eine Datenbank zur Speicherung der Adressdatei. Die Sendungskomponente umfasst Mittel zur Einbindung eines Codes in jeweils eine Sendung und die erfindungsgemäße Anordnung weist eine Website des Kunden zur Eingabe des Codes durch einen Empfänger der Sendung auf. Dabei ist die Website so ausgebildet, dass sie auf die Adressdatei in der Servicekomponente zugreifen kann. Die Servicekomponente ist beispielsweise über das Internet mit der Website eines Kunden verbindbar.

In einem besonders bevorzugten Ausführungsbeispiel der Erfindung ist in dem Code eine Zufallszahl verschlüsselt. Wird eine Sendungskomponente mit einem Codeerzeugungsmittel eingesetzt, hat es sich als vorteilhaft erwiesen, dass die verwendete Zufallszahl in einem Speichermittel der Sendungskomponente hinterlegt wird. Erfolgt die Codeerzeugung in der Servicekomponente, ist es dagegen zweckmäßig, die Zufallszahl in der Datenbank der Servicekomponente zu speichern. Es können jedoch auch alternative Zwischenformen dieser Anwendungsbeispiele gewählt werden.

In dem Code ist zusätzlich zu der Zufallszahl eine Ticketnummer verschlüsselt, wobei die Ticketnummer aus einer Reihe von fortlaufenden Zahlen gewonnen wird, welche für den Kunden bereitgestellt werden.

Von der Erfindung umfasst ist ferner ein Verfahren zur Erzeugung einer Sendung an einer Sendungskomponente, Das Verfahren sieht die Erzeugung wenigstens eines eindeutigen Codes und die Aufnahme des Codes in die Sendungskomponente vor. Der Code wird durch die Sendungskomponente zu den Empfängerinformationen einer jeweiligen Sendung zugeordnet und die Sendungskomponente erzeugt eine Adressdatei, wobei in der Adressdatei jeweils einem Datensatz mit einer Empfängerinformation ein Code zugeordnet ist. Die Adressdatei wird an die Servicekomponente übermittelt und der Code durch die Sendungskomponente in eine Sendung eingebunden. Die Sendung wird an einen Empfänger übermittelt.

Bei Eingabe des Codes durch den Empfänger auf der Website des Kunden wird eine Verbindung der website mit der Servicekomponente hergestellt, um auf die Adressdatei in der Datenbank zuzugreifen. Die Empfängerinformationen aus der Adressdatei werden eingelesen, woraufhin ein personalisierter Zugriff auf die Website erfolgt.

In einem besonders bevorzugten Ausführungsbeispiel der Erfindung ordnet die Sendungskomponente jedem Code eine Ticketnummer zu, wobei die Ticketnummer aus einer Reihe von fortlaufenden Zahlen gewonnen wird, welche für den Kunden bereitgestellt wurde und die Sendungskomponente ordnet die Ticketnummer einem Datensatz mit einem Code und zugehörigen Empfängerinformationen in der Adressdatei zu. Ferner wird die Ticketnummer im Code verschlüsselt.

Die Ticketnummer wird in dem Code vorzugsweise mit einer Zufallszahl verschlüsselt, wobei die verwendete Zufallszahl je nach Anordnung des Codeerzeugungsmittels in der Sendungskomponente oder in der Servicekomponente entsprechend abgespeichert wird. Befindet sich das Codeerzeugungsmittel in der Sendungskomponente, wird die Zufallszahl vorzugsweise in einem Speichermittel der Sendungekomponente gespeichert. Wird das Codeerzeugungsmittel in der Servicekomponente eingesetzt, hat es sich als vorteilhaft erwiesen, die Zufallszahl in der Datenbank der Servicekomponente zu hinterlegen.

Die Adressdatei wird ebenfalls in einer Datenbank der Servicekomponente hinterlegt und die Website des Kunden wird bei der Eingabe eines Codes zum Hochladen der Adressdatei mit der Servicekomponente verbunden. Bei Eingabe eines Codes auf der Website wird die Ticketnummer aus dem Code extrahiert und dadurch der zugehörige Datensatz mit Empfängerinformationen identifiziert.

In einem vorteilhaften Ausführungsbeispiel der Erfindung werden Aktionen des Empfängers auf der Website in der Servicekomponente registriert und dem Kunden werden Informationen über die Aktionen übermittelt.

Die erfindungsgemäße Anordnung von Vorrichtungen und das zugehörige Verfahren bringen verschiedene Vorteile mit sich. Sie ermöglichen insbesondere die persönliche Ansprache von Empfängern von Mailings auf einer Internetseite. Ferner kann das Ausfüllen von Formularmasken auf ein Minimum reduziert werden. Dies vermeidet Fehler bei der Eingabe und stellt für den Benutzer ein Verfahren mit sehr geringem Aufwand dar. Da herkömmliche Mailings, bei denen eine Response über eine schriftliche Rückantwort gefordert ist, durch die Möglichkeit der Response über eine Internetseite ergänzt werden, wird so eine Mehrkanalansprache ermöglicht. Dies kann für den Versender des Mailings zu mehr Reaktionen auf seine Sendungen führen.

Ferner müssen klassische Responsemedien wie Werbeantwort, Fax oder Telefon nicht mehr erfasst und ausgewertet werden, sondern der Responseverlauf ist sofort ersichtlich. Die Daten sind vorzugsweise sofort via Download von der Servicekomponente verfügbar. Die Effizienz bei der Auswertung der verschiedenen Reaktionsarten lässt sich somit steigern und es erfolgt durchgehend eine Datenhaltung im digitalen Format. Adressdaten, die für ein Mailing bereits digital in Datenbanken vorliegen, werden im digitalen Format gehalten und können auch nach dem entsprechenden Kundenimpuls im digitalen Format weiterverarbeitet werden.

Die Verwendung einer Servicekomponente in Form einer Auftragsplattform im Internet, die von beliebigen Kunden genutzt werden kann, hat für die Kunden den Vorteil sehr geringer oder gar keiner Investitionskosten. Die Personalkosten sind ebenfalls gering. Dabei können die Funktionalitäten der Servicekomponente flexibel ausgestaltet werden. Soll die Codeerzeugung beispielsweise nicht als Service bereitgestellt werden, weil ein Kunde bereits über Mittel zum Erzeugen von Codes verfügt, kann die Servicekomponente lediglich zur Hinterlegung der resultierenden Adressdatei dienen. So könnte ein Kunde in einem von der Servicekomponente vorgegebenen Rahmen eine eigene Vorstellung eines Codes realisieren, könnte jedoch beispielsweise den Service der Response-Verarbeitung nutzen. Dies ist beispielsweise der Fall, wenn der Kunde über eine Sendungskomponente verfügt, welche ein Codeerzeugungsmittel umfasst.

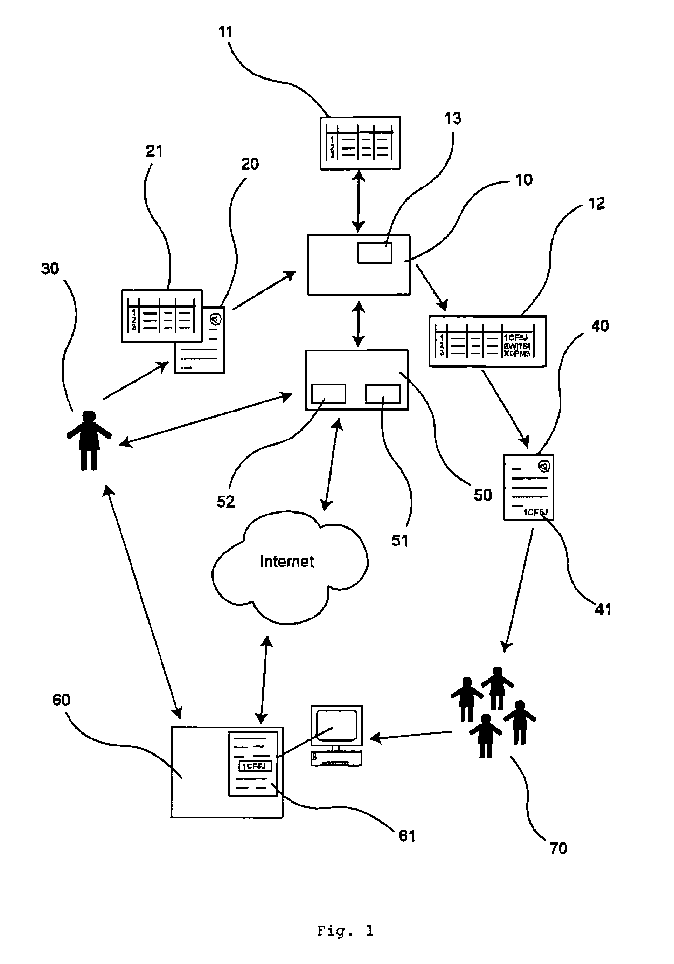

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Abbildung in Fig. 1.

In Fig. 1 ist ein besonders bevorzugtes Ausführungsbeispiel der erfindungsgemäßen Anordnung von Vorrichtungen und des zugehörigen erfindungsgemäßen Verfahrens dargestellt. Ein wesentlicher Bestandteil der Erfindung ist dabei die Ergänzung einer Sendungskomponente 10 zur Erzeugung von Sendungen 40 mit einer Servicekomponente 50 und einem Codeerzeugungsmittel 51, wobei das Codeerzeugungsmittel je nach Ausführungsform verschiedenen Komponenten der Anordnung zuzuordnen ist. Bei der Sendungskomponente 10 kann es sich beispielsweise um einen Computer eines Kunden 30 handeln, auf welchem ein entsprechendes Programm bzw. eine Anwendung installiert ist. Der Begriff "Computer" ist dabei in keiner Weise einschränkend zu verstehen. Es kann sich hierbei um eine beliebige, zur Durchführung von Berechnungen geeignete Einheit handeln, beispielsweise eine Workstation, einen Personalcomputer, einen Mikrocomputer oder eine zur Durchführung von Berechnungen und/oder Vergleichen geeignete Schaltung. Die Sendungskomponente kann ferner ein zentraler Server sein, auf dem eine Anwendung zur Nutzung durch mehrere Kunden installiert ist.

Bekannte Computeranwendungen im Bereich des Direktmarketings, welche in der Sendungskomponente 10 enthalten sein können, dienen beispielsweise zur Erzeugung von Infopost, welche zu besonderen Tarifen von einem Postunternehmen transportiert wird. So können Werbesendungen, Kataloge, Produktmuster, Werbeartikel, etc. zu einem besonders günstigen Preis an mehrere Ansprechpartner versendet werden. Eine Portovergünstigung ist dabei beispielsweise abhängig von einer Mindestanzahl von Sendungen in einem Postleitzahlenbereich und der Vorsortierung von Sendungen, Die Computeranwendung kann den Kunden bei der erforderlichen Vorbereitung der Infopost unterstützen, indem sie eine Anschriftenüberprüfung, einen Dublettenabgleich und eine Portooptimierung durchführt und die zur Fertigung und Einlieferung benötigten Unterlagen vorbereitet.

Die Sendungskomponente 10 kann jedoch auch zum Versenden von Mailinge ohne Preisvergünstigung eingesetzt werden. Zur Anwendung können somit jegliche Vorrichtungen kommen, welche einem Kunden die Erzeugung von wenigstens einer Sendung ermöglichen, wobei der Kunde für die Erzeugung der Sendung eine individuelle Vorlage 20 bereitstellt. Dabei können unter die Bezeichnung "Sendung" sowohl papierbasierte, adressierte Briefe bzw. Drucksachen als auch elektronische Mails gefasst werden. Die Vorlage kann einen vorbereiteten Text, graphische Symbole oder sonstige Elemente enthalten.

Bei der Erzeugung der Sendungen aus der Vorlage greift die Sendungskomponente auf eine Datenquelle mit Empfängerinformationen zu, um jede Sendung mit einer Empfängeradresse zu versehen. Die Empfängerinformationen können als Datenquelle 21 beim Kunden vorliegen. Sie können ferner von der Sendungskomponente 10 bereitgestellt werden, so dass eine zentrale Adressdatenbank 11 mit Empfängerinformationen mehreren Kunden zur Verfügung gestellt wird. Als Datenquelle können dabei beispielsweise Adressdateien in den Formaten Excel, Access, dBase und/oder ASCII zur Anwendung kommen.

Druckt ein Kunde 30 seine Massenmailings nicht selber aus, sondern übergibt sie beispielsweise einem Lettershop, kann es vorgesehen sein, dass die Sendungskomponente 10 eine Datei für das betreffende Projekt erzeugt, die alle notwendigen Informationen wie die bereinigten Adressen, die Daten zu den Sendungen und den gestalteten Serienbrief enthält. Diese Datei kann dem Lettershop übergeben werden.

Aufbauend auf der beschriebenen Verwendung einer Sendungskomponente 10 zur Erzeugung von Sendungen sieht die Erfindung die Verbindung der Sendungskomponente 10 mit einer Servicekomponente 50 vor. Die Servicekomponente 50 dient in dem in Fig. 1 dargestellten Ausführungsbeispiel der Erfindung zur Erzeugung und Bereitstellung mehrerer Codes für das Versenden von Mailings, so dass das Codeerzeugungsmittel 51 der Servicekomponente 50 zuzuordnen ist. In diesem Fall umfasst die Servicekomponente 50 Mittel zur Übermittlung der Codes an die Sendungskomponente 10 und die Sendungskomponente 10 umfasst Mittel zur Aufnahme der Codes in ihre Funktionsabläufe.

In einer weiteren bevorzugten Ausführungsform der Erfindung ist das Codeerzeugungsmittel 51 der Sendungskomponente 10 zuzuordnen. Diese Ausführungsform ist in Fig. 1 nicht dargestellt, in diesem Fall würde die Codeerzeugung jedoch einfach im Bereich des Kunden 30 stattfinden. Dabei umfasst die Sendungskomponente ein Codeerzeugungsmittel und Mittel zur Aufnahme der Codes in ihre Funktionsabläufe.

Die Servicekomponente 50 dient ferner zur Hinterlegung einer Adressdatei mit Empfängerinformationen, deren Datensätzen jeweils ein Code zugeordnet ist. Die Servicekomponente kann darüber hinaus zur Auswertung der Zugriffe auf eine Website 61 des Kunden mit den versendeten Codes eingesetzt werden.

Es hat sich als vorteilhaft erwiesen, dass die Servicekomponente 50 von mehreren Kunden genutzt werden kann, so dass sie in einem Ausführungsbeispiel der Erfindung so ausgestaltet ist, dass sie zentral angeordnet ist und mehrere Kunden Zugriff auf die Servicekomponente haben. Eine derartige Ausführung ist beispielsweise gegeben, wenn die Servicekomponente auf einem Server eines Anbieters hinterlegt wird, so dass die Servicekomponente als Internetanwendung für mehrere Kunden verfügbar ist. Die Servicekomponente 50 stellt somit eine Auftragsplattform dar, die von einem Dienstleister (Application Service Provider) bereitgestellt wird und an der interessierte Versender/Kunden über eine Dialogkommunikation Projekte anlegen und abwickeln können. Um den Zugriff auf die Servicekomponente 50 zu kontrollieren, ist es in einem bevorzugten Ausführungsbeispiel der Erfindung vorgesehen, dass sich ein Kunde an der Servicekomponente registriert und daraufhin eine Versender-ID (Kundennummer) und ein Passwort erhält.

Die Verbindung der Sendungskomponente mit der Servicekomponente kann vorzugsweise über eine Internetverbindung erfolgen, so dass Daten direkt zwischen den beiden Komponenten übertragen werden können. Um den Zugriff von unberechtigten Personen auf von der Servicekomponente 50 übertragene Daten zu verhindern, werden die Internetseiten der Servicekomponente vorzugsweise verschlüsselt, bevor sie über das Internet übertragen werden. Beispielsweise kann ein SSL-/TLS-Standard mit einer Verschlüsselungsstärke von mindestens 128 Bit eingesetzt werden. In einem weiteren Ausführungsbeispiel der Erfindung sind die Sendungskomponente und die Servicekomponente nicht direkt miteinander verbunden, sondern der Datentransfer erfolgt beispielsweise über den Versender/Kunden, welchem Dateien von einer Komponente bereitgestellt werden, welche er in die andere Komponente einspeist.

Die Servicekomponente 50 umfasst in dem in Fig. 1 dargestellten Ausführungsbeispiel Mittel 51 zur Erzeugung wenigstens eines eindeutigen Codes 41 und zur Übermittlung des Codes an die Sendungskomponente 10, welche den Code in eine Sendung einbindet. Da die Sendungskomponente vorzugsweise Massenmailings erzeugt, für welche mehrere Codes benötigt werden, weist die Servicekomponente Mittel zur Erzeugung einer größeren Anzahl von eindeutigen Codes für verschiedene Kunden auf. In einem besonders bevorzugten Ausführungsbeispiel der Erfindung gibt der Kunde 30 der Servicekomponente 50 an, wie viele Sendungen er verschicken möchte, d.h. wie viele Codes er benötigt. Ist dies dem Kunden nicht im Voraus bekannt, reserviert die Servicekomponente eine bestimmte Anzahl von Codes.

Da ein Code 41 von einem Empfänger 70 in ein Dialogfeld einer Website 61 des versendenden Kunden 30 eingegeben werden muss, hat es sich als vorteilhaft erwiesen, Codes mit einer kurzen oder mittleren Stellenanzahl einzusetzen. Beispielsweise bieten 10-stellige Codes aus einem 55er-Alphabet eine ausreichende Anzahl von Stellen für eine effektive Verschlüsselung, sie sind jedoch von einem Empfänger mit vertretbarem Aufwand einzugeben. Um anhand des Codes auf eine zugeordnete Adressdatei schließen zu können, sollte in dem Code wenigstens der Kunde und das Projekt verschlüsselt sein. Ferner sollte verhindert werden, dass durch das zufällige Eintippen eines Codes oder durch Ausprobieren ein falscher Adressdatensatz abrufbar ist,

Um die genannten Anforderungen zu erfüllen, erfolgt die Verschlüsselung in einem besonders bevorzugten Ausführungsbeispiel der Erfindung durch die Verschlüsselung von Ticketnummern und der Versender-ID des Kunden. Um weitere Verwechslungen zu vermeiden, kann ferner eine Bezeichnung des Mailings verschlüsselt werden. Die Servicekomponente 50 verwaltet eine bestimmte Anzahl von Ticketnummern, die zur Verschlüsselung und Verwaltung der Codes dienen. Um für mehrere Kunden eine ausreichende Anzahl von Ticketnummern bereitzustellen, können beispielsweise Ticketnummern von 0 bis 2³⁰ verwendet werden.

Hat die Servicekomponente 50 beispielsweise die Ticketnummer 206.001 als zuletzt für ein Mailing vergebene Ticketnummer gespeichert und wünscht ein Kunde mit der Versender-ID 843 Codes für ein Mailing mit der Bezeichnung "SSV" mit etwa 50.000 Empfängern, sieht eine bevorzugte Ausführungsform der Erfindung vor, dass die Daten 206.001, 256.000, 843 und SSV in einer Aktionstabelle hinterlegt und als so genannte Aktions-ID verschlüsselt werden. Die Aktions-ID wird dem Kunden 33 übermittelt und kann vom Kunden in der Sendungskomponente 10 eingegeben werden. In der Sendungskomponente werden die Daten eingelesen und die verschlüsselten Informationen extrahiert. Gegebenenfalls kann eine Überprüfung der Information erfolgen.

Mit der Aktivns-ID ist eine Datei in die Sendungskomponente 10 einlesbar, welche zu der gewünschten Anzahl von Ticketnummern jeweils einen Code 41 enthält. Wird eine Ausführungsform gewählt, bei der die Codeerzeugung innerhalb der Sendungskomponente erfolgt, werden der Sendungskomponente beispielsweise lediglich die reservierten Ticketnummern übermittelt, welche von der Sendungskomponente zu Codes verschlüsselt werden.

Der Code 41 wird in einem besonders bevorzugten Ausführungsbeispiel der Erfindung durch eine Verschlüsselung jeweils einer Ticketnummer mit einer Zufallszahl gebildet. Die Verwendung einer Zufallszahl erhöht dabei die Sicherheit des Codes gegen unbefugte Zugriffe. Die Zufallszahl wird in einer Datenbank beziehungsweise einem Speichermittel gespeichert, auf das Unbefugte keinen Zugriff haben. Die Zufallszahl kann vorzugsweise in einer Datenbank 52 der Servicekomponente hinterlegt werden, falls die Codeerzeugung von der Servicekomponente durchgeführt wird. Erfolgt die Codeerzeugung dagegen in der Sendungskomponente, kann es zweckmäßig sein, die Zufallszahl in einem Speichermittel 13 der Sendungskomponente zu hinterlegen.

Aus der Ticketnummer und der Zufallszahl wird vorzugsweise ein 9-stelliger Code erzeugt. Die Codeerzeugung kann dabei bekannte Teilaspekte wie die Berechnung und Umwandlung von Binärzahlen, die Berücksichtigung der Position in dem Code und das Einfließen eines zuletzt ermittelten Wertes in die Berechnung des nachfolgenden Wertes (Chaining) verwenden. Es hat sich als vorteilhaft erwiesen, an den 9-stelligen Code eine einstellige Prüfziffer anzuhängen, so dass sich ein 10-stelliger Code ergibt, dessen Zusammensetzung aus Zahlen und Buchstaben sich nicht direkt offenbart.

Geht man davon aus, dass Unbefugte keinen Zugriff auf die Datenbank 52 der Servicekomponente 50 und/oder das entsprechende Speichermittel 13 der Sendungskomponente 10 und damit auf die verwendeten Zufallszahlen haben, stellt der Code eine sichere Verschlüsselung der Daten dar. Die Servicekomponente 50 stellt dem Kunden 30 somit beispielsweise die Erzeugung und Verwaltung verschlüsselter Codes zur Verfügung, ohne dass der Kunde selbst ein aufwändiges Verschlüsselungsverfahren betreiben und eine sichere Datenhaltung realisieren muss. Steht dem Kunden in seinem Bereich bereits ein Codeerzeugungsmittel zur Verfügung, kann er dieses dennoch nutzen und beispielsweise lediglich den Service der Response-Verwaltung inklusive der Hinterlegung der Adressdatei nutzen.

Die Sendungskomponente 10 verarbeitet die von der Servicekomponente 50 erhaltenen Daten vorzugsweise dadurch, dass sie die erzeugten Codes mit der zugehörigen Ticketnummer jeweils einem Adressdatensatz in einer von der Sendungskomponente verwendeten Adressdatei zuordnet. Jede Adressdatei enthält Angaben zu einem Empfänger beispielsweise in Form von Anrede, Vornamen, Familiennamen, Firmennamen, Straße, Postleitzahl und/oder Ort. Die Datensätze können wie üblich auf Anschriftenfehler und Dubletten geprüft werden und als zusätzliche Angabe werden zu jedem Adressdatensatz eine Ticketnummer und ein Code gespeichert. Die Ticketnummer und der Code können dabei beispielsweise in zusätzlichen Spalten der Adressdatei gespeichert werden. Eine so ergänzte Adressdatei 12 mit den zugeordneten Ticketnummern und Codes wird in der Sendungskomponente 10 erzeugt und kann von dieser verwaltet werden.

In einem besonders bevorzugten Ausführungsbeispiel der Erfindung wird die Adressdatei 12 vom Kunden in die Servicekomponente 50 exportiert und dort in der Datenbank 52 hinterlegt. Dies hat den Vorteil, dass die Servicekomponente 50 die Adressdateien mehrerer Kunden im Internet verfügbar machen, eine Auswertung der Zugriffe durchführen und diese Auswertung den Kunden übermitteln kann. Um die Adressdatei 12 eines Kunden 30 in der Datenbank 52 identifizieren zu können, wird sie vorzugsweise mit einer eindeutigen Identifikation versehen. Beispielsweise kann der Kunde seine Kundennummer eingeben und diese wird der Adressdatei zugeordnet.

Nach Erzeugung der Adressdatei 12 stellt die Sendungskomponente 10 anhand einer Vorlage 20 des Kunden eine oder mehrere Sendungen 40 her. Die Sendungskomponente weist dazu Mittel zur Verarbeitung der durch die Ticketnummern und die Codes ergänzten Adressdatei 12 und Mittel zur Einbindung eines Codes in jeweils eine Sendung auf. Dabei wird für jeden Datensatz der Adressdatei 12 eine Sendung erzeugt und der zugeordnete Code 41 an einer vorbestimmten Stelle innerhalb der Vorlage 20 eingefügt. Die Einfügung des Codes kann beispielsweise als Platzierung eines Seriendruckfeldes an einer oder mehreren Stellen erfolgen.

Der Text der Sendung enthält ferner die Angabe einer Internetseite, auf welcher der Code eingegeben werden kann. Die Sendung kann nun vom Kunden 30 ausgedruckt und einem Zustellunternehmen zum Transport übergeben werden. In einem weiteren Ausführungsbeispiel der Erfindung erzeugt die Sendungskomponente eine Datei mit allen für den Ausdruck erforderlichen Daten, so dass der Kunde einen Dienstleister mit dem Ausdruck beauftragen kann.

Vor dem Versand der Sendung 40 an einen Empfänger 70 ist es erforderlich, dass eine Internetseite 61 des Kunden 30 so angepasst wird, dass die Eingabe des Codes einen personalisierten Zugriff bewirkt. Die Codeeingabe kann beispielsweise in eine Microsite integriert werden. Bei einer Microsite handelt es sich um eine eigenständige und von der eigentlichen website des Kunden abgekapselte Internetpräsenz. In einem Ausführungsbeispiel der Erfindung liegt eine Microsite auf einem Server der Servicekomponente 50, sie kann jedoch im Design an die Website 61 des Kunden 30 angepasst sein. Die Anpassung kann beispielsweise mittels einer CSS-Datei (Cascading Style Sheets) erfolgen und eignet sich insbesondere zur Platzierung einer Datenabfrage oder einer Adressbox. So kann die Website des Kunden 30 in seinem individuellen Design gestaltet werden und es wird lediglich die technische Infrastruktur der Servicekomponente 50 genutzt.

In einem weiteren Ausführungsbeispiel der Erfindung erfolgt die Integration personalisierter Elemente über ein downloadbares Script. Dazu können vorbereitete Scripte in den Quelltext der Website übernommen werden. Über das Script werden die einzelnen Adressdaten als Variable zur Verfügung gestellt und können überall auf der Seite eingesetzt werden. Dies eignet sich beispielsweise für die personalisierte Anrede oder ein vorausgefülltes Formular.

Die Sendung wird einem Empfänger 70 übermittelt, welcher der Sendung den für ihn vorgesehenen Code 41 entnehmen kann. Der Empfänger kann nun entscheiden, ob er mittels eines Computers die in der Sendung angegebene Internetseite betreten und seinen erhaltenen Code in einem dafür vorgesehenen Feld eingeben möchte. Gibt der Kunde den Code ein, erfolgt daraufhin vorzugsweise eine Prüfung und Verarbeitung des Codes. Die Prüfung des Codes kann beispielsweise eine Prüfung der syntaktischen Korrektheit umfassen, bei der die im Code enthaltene Prüfziffer validiert wird. Diese Prüfung kann beispielsweise als schnelle Überprüfung von Tippfehlern dienen.

Die Website 61 steht über den Server 60 des Kunden vorzugsweise in Verbindung mit der Servicekomponente 50, in welcher sich die Datenbank 52 mit den gespeicherten Empfängeradressen, Ticketnummern und Codes mehrerer Kunden befinden. Diese Verbindung erfolgt vorzugsweise über das Internet. Aus dem eingegebenen Code 41 wird nun die darin enthaltene Ticketnummer extrahiert. Bei Bedarf kann über die Datenbank 52 bereits ermittelt werden, auf welches Mailing bei welchem Versender sich der Code bezieht. Nach dieser Verarbeitung der Codeinformationen könnte beispielsweise auf eine spezielle Versender-Datenbank zugegriffen werden.

In der Datenbank 52 wird nun der Datensatz mit der extrahierten Ticketnummer gesucht. Existiert kein solcher Datensatz, wird der Code als ungültig angesehen und dem Empfänger 70 auf der Internetseite eine entsprechende Meldung angezeigt. Ist der Code korrekt, wird der entsprechende Datensatz aus der Datenbank 52 über die Internetverbindung hochgeladen und der Inhalt des Datensatzes wird wie programmiert auf der Website 61 dargestellt.

Die Servicekomponente 50 registriert jeden erfolgreichen Login mit einem Code und erfasst durch einen Empfänger 70 eingegebene Adressänderungen. Ferner erfasst die Servicekomponente Storni und zeichnet Dialogfeldinformationen auf. Diese Informationen werden auftragsbezogen in der Datenbank 52 gespeichert und dem Kunden bereitgestellt. Dies kann über einen Abruf auf dem Server der Servicekomponente 50 oder durch eine aktive Benachrichtigung des Kunden erfolgen.

Vorzugsweise ist es vorgesehen, dass die Laufzeit eines Mailings auf einen bestimmten Zeitraum begrenzt ist. Die Adressdatei 12 eines Kunden wird somit nach Ablauf dieses Zeitraumes deaktiviert und ein Einloggen mit einem der vergebenen Codes ist nicht mehr möglich. Spätestens wenn die Ticketnummern neu vergeben werden, müssen die zugehörigen Adressdatensätze aus der Datenbank 52 entfernt werden, da nachfolgend andere Daten unter dieser Ticketnummer importiert werden.

### Bezugszeichenliste:

- 10: Sendungskomponente
- 11: Adreasdatenbank der Sendungskomponente
- 12: Adressdatei mit Code
- 13: Speichermittel der Sendungskomponente
- 20: Vorlage für Sendung
- 21: Adressdatenbank des Kunden
- 30: Kunde/Versender
- 40: Sendung
- 41: Code
- 50: Servicekomponente
- 51: Codeerzeugungsmittel
- 52: Datenbank der Servicekomponente
- 60: Server
- 61: Website
- 70: Empfänger

## Patentansprüche

1. Anordnung von Vorrichtungen zur Erzeugung einer Sendung (40) an einer Sendungskomponente (10), wobei die Sendungskomponente (10) Mittel zur Erzeugung einer oder mehrerer Sendungen (40) aus einer Vorlage (20) umfasst, die von einem Kunden (30) an der Sendungskomponente (10) bereitgestellt wird, wobei die Sendungskomponente (10) Mittel zum Zugriff auf eine Datenquelle mit Empfängerinformationen umfasst,
**dadurch gekennzeichnet,**
**dass** die Anordnung Codeerzeugungsmittel (51) zur Erzeugung wenigstens eines eindeutigen Codes (41) und Mittel zur Aufnahme des Codes (41) in die Sendungskomponente (10) umfasst und dass die Sendungskomponente (10) Mittel zur Erzeugung einer Adressdatei (12) aufweist, wobei in der Adressdatei (12) jeweils einem Datensatz mit Empfängerinformationen ein Code (41) zugeordnet ist und dass die Sendungskomponente (10) Mittel zur Übermittlung der Adressdatei (12) an eine Servicekomponente (50) aufweist, wobei die Servicekomponente (50) physikalisch von der Sendungskomponente (10) getrennt ist und eine Datenbank (52) zur Speicherung der Adressdatei (12) umfasst, und
**dass** die Sendungskomponente (10) Mittel zur Einbindung eines Codes (41) in jeweils eine Sendung (40) umfasst und dass die Anordnung eine Website (61) des Kunden (30) zur Eingabe des Codes (41) durch einen Empfänger (70) der Sendung (40) umfasst, wobei die Website (61) so ausgebildet ist, dass sie auf die Adressdatei (12) in der Servicekomponente (50) zugreifen kann.

2. Anordnung nach Anspruch 1,
**dadurch gekennzeichnet,**
**dass** die Servicekomponente (50) über das Internet mit der Website (61) eines Kunden (30) verbindbar ist.

3. Anordnung nach einem oder beiden der Ansprüche 1 und 2,
**dadurch gekennzeichnet,**
**dass** das Codeerzeugungsmittel (51) der Servicekomponente (50) zuzuordnen ist und die Servicekomponente (50) Mittel zur Übermittlung wenigstens eines Codes (41) an die Sendungskomponente (10) umfasst.

4. Anordnung nach einem oder beiden der Ansprüche 1 und 2,
**dadurch gekennzeichnet,**
**dass** das Codeerzeugungsmittel (51) der Sendungskomponente (10) zuzuordnen ist.

5. Anordnung nach einem oder mehreren der Ansprüche 1 bis 4,
**dadurch gekennzeichnet,**
**dass** in dem Code (41) eine Zufallszahl gespeichert ist.

6. Anordnung nach Anspruch 3 und 5,
**dadurch gekennzeichnet,**
**dass** die verwendete Zufallszahl in der Datenbank (52) der Servicekomponente (50) gespeichert ist.

7. Anordnung nach Anspruch 4 und 5,
**dadurch gekennzeichnet,**
**dass** die verwendete Zufallszahl in einem Speichermittel (13) der Sendungskomponente (10) gespeichert ist.

8. Anordnung nach einem oder mehreren der vorangegangenen
Ansprüche 1 bis 7,
**dadurch gekennzeichnet,**
**dass** in dem Code (41) eine Ticketnummer und eine Zufallszahl verschlüsselt sind, wobei die Ticketnummer aus einer Reihe von fortlaufenden Zahlen gewonnen wird, welche für den Kunden (30) bereitgestellt werden.

9. Verfahren zur Erzeugung einer Sendung (40) an einer Sendungskomponente (10), bei dem die Sendungskomponente (10) eine oder mehrere Sendungen (40) aus einer Vorlage (20) erzeugt, die von einem Kunden (30) an der Sendungekomponente (10) bereitgestellt wird, wobei die Sendungskomponente (10) auf eine Datenquelle mit Empfängerinformationen zugreift,
**gekennzeichnet durch**
folgende Schritte:
- Erzeugung wenigstens eines eindeutigen Codes (41) und Aufnahme des Codes in die Sendungskomponente (10);
- Zuordnung des Codes (41) zu den Empfängerinformationen einer jeweiligen Sendung (40) **durch** die Sendungskomponente (10) und Erzeugung einer Adressdatei (12) **durch** die Sendungskomponente (10), wobei in der Adressdatei (12) jeweils einem Datensatz mit einer Empfängerinformation ein Code (41) zugeordnet ist;
- Übermittlung der Adressdatei (12) an eine Servicekomponente (50), die physikalisch von der Sendungskomponente (10) getrennt ist und Speicherung der Adressdatei in einer Datenbank (52) der Servicekomponente (50) ;
- Einbindung des Codes (41) in eine Sendung (40) **durch** die Sendungskomponente (10) und Übermittlung der Sendung (40) an einen Empfänger (70);
- Verbindung einer Website (61) des Kunden (30) mit der Servicekomponente (50), um auf die Adressdatei (12) in der Datenbank (52) zuzugreifen und Einlesen der Empfängerinformationen aus der Adressdatei (12) bei Eingabe des Codes (41) **durch** einen Empfänger (70) auf der Website (61) des Kunden (30), woraufhin ein personalisierter Zugriff auf die Website (61) erfolgt.

10. Verfahren nach Anspruch 9,
**dadurch gekennzeichnet,**
**dass** der Code (41) in einem Codeerzeugungsmittel (51) erzeugt wird, welches der Servicekomponente (50) zuzuordnen ist, wobei die Servicekomponente (50) den Code (41) an die Sendungskomponente (10) übermittelt.

11. Verfahren nach Anspruch 9,
**dadurch gekennzeichnet,**
**dass** der Code (41) in einem Codeerzeugungsmittel (51) erzeugt wird, welches der Sendungskomponente (10) zuzuordnen ist.

12. Verfahren nach einem oder mehreren der vorangegangenen
Ansprüche 9 bis 11,
**dadurch gekennzeichnet,**
**dass** in dem Code (41) eine Zufallszahl verschlüsselt wird.

13. Verfahren nach den Ansprüchen 10 und 12,
**dadurch gekennzeichnet,**
**dass** die Zufallszahl in einer Datenbank (52) der Servicekomponente (50) gespeichert wird.

14. Verfahren nach den Ansprüchen 11 und 12,
**dadurch gekennzeichnet,**
**dass** die Zufallszahl in einem Speichermittel (13) der Sendungskomponente (10) gespeichert wird.

15. Verfahren nach einem oder mehreren der vorangegangenen
Ansprüche 9 bis 14,
**dadurch gekennzeichnet,**
**dass** die Sendungskomponente (10) jedem Code (41) eine Ticketnummer zuordnet, wobei die Ticketnummer aus einer Reihe von fortlaufenden Zahlen gewonnen wird, welche für den Kunden (30) bereitgestellt wurde und dass die Sendungskomponente (10) die Ticketnummer einem Datensatz mit einem Code (41) und zugehörigen Empfängerinformationen in der Adressdatei (12) zuordnet und die Ticketnummer im Code (41) verschlüsselt wird.

16. Verfahren nach einem oder mehreren der Ansprüche 9 bis 15,
**dadurch gekennzeichnet,**
**dass** die Adressdatei (12) in einer Datenbank (52) der Servicekomponente (50) hinterlegt wird und die Website (61) des Kunden (30) bei der Eingabe eines Codes (41) zum Hochladen der Adressdatei (12) mit der Servicekomponente (50) verbunden wird.

17. Verfahren nach einem oder mehreren der Ansprüche 9 bis 16,
**dadurch gekennzeichnet,**
**dass** bei Eingabe eines Codes (41) auf einer Website (61) des Kunden (30) die Ticketnummer aus dem Code (41) extrahiert und **dadurch** der zugehörige Datensatz mit Empfängerinformationen identifiziert wird.

18. Verfahren nach einem oder mehreren der Ansprüche 9 bis 17,
**dadurch gekennzeichnet,**
**dass** Aktionen des Empfängers (70) auf der website (61) in der Servicekomponente (50) registriert und dem Kunden (30) Informationen über die Aktionen übermittelt werden.
